# EUROPÄISCHE PATENTSCHRIFT

(11) **EP 1 695 771 B1**
(45) Veröffentlichungstag und Bekanntmachung des Hinweises auf die Patenterteilung: **01.10.2008**
(21) Anmeldenummer: 05004330.6
(22) Anmeldetag: 28.02.2005
(51) Int. Cl.: B09B 3/00, B30B 9/12, B30B 9/02, C11B 13/00

(54) **Verfahren zur Aufbereitung von Lebensmittelresten und/oder Produktabfällen für eine Entsorgung sowie Vorrichtung zur Durchführung des Verfahrens**
Process and apparatus for processing food rests and/or waste products for their disposal
Procédé et appareil pour la préparation de restes de nourriture et/ou de dechets en vue de leur élimination

(43) Veröffentlichungstag der Anmeldung: 30.08.2006
(73) Patentinhaber: Beckmann, Stefan, Dipl.-Ing., 35580 Wetzlar-Nauborn (DE)
(72) Erfinder: Horst Sahm, D-35753 Greifenstein (DE)
(74) Vertreter: Knefel, Cordula

(56) Entgegenhaltungen:
- DE-A1- 3 904 698
- US-A- 3 398 676
- US-A- 3 939 763
- US-A1- 2004 127 355

## Beschreibung

Die Erfindung betrifft ein Verfahren zur Aufbereitung von Lebensmittelresten und/oder Produktabfällen für eine Entsorgung sowie eine Vorrichtung zur Durchführung des verfahrens.

Gemäß dem Stand der Technik werden Lebensmittelreste kleingehäckselt. Diese werden getrocknet, um sie verbrennen zu können. Bei diesen zum Stand der Technik gehörenden Verfahren besteht der Nachteil, dass Fett und Wasser aus den Essensresten über das Abwasser in die Kläranlagen gelangen, was jedoch nicht erlaubt ist.

Zum Stand der Technik (US-A 3,398,676) gehört eine Vorrichtung, in der vorwiegend Tierabfälle zerkleinert und von Fett und Wasser befreit werden. Das Fett-/Wassergemisch wird aus dem Prozess gemäß dieser Druckschrift ausgeleitet.

Das Dokument US-A-3 398 676 umfasst ein Verfahren gemäss dem Oberbegriff des Anspruchs 1 und eine Vorrichtung gemäss den Oberbegriff des Anspruchs 6.

Zum Stand der Tecknik (US 2004/0127355 A1) gehört ein Verfahren, bei dem zu dem Abfall Bindemittel gegeben wird. Das Wasser wird hierdurch entzogen.

Weiterhin gehört zum Stand der Technik (US-A 3,939,763) eine kontinuierlich arbeitende Presse, bei der Wasser und Fett aus Produktabfällen durch Erhitzen der Vorrichtung abgeschieden werden.

Weiterhin gehört zum Stand der Technik (DE 39 04 698 A1) ein Verfahren zur Verarbeitung von tierischen Einsatzstoffen.

Das der Erfindung zugrunde liegende technische Problem besteht darin, ein verfahren anzugeben, mit dem Lebensmittelreste und/oder Produktabfälle derart aufbereitet werden, dass die festen Bestandteile und das Fett einen Trocknungszustand erreichen, derart, dass die Reste beispielsweise verbrannt werden können und dass das anfallende Wasser Reinlichkeitswerte aufweist, die in dem Bereich liegen, dass sie einer Kläranlage zugeführt werden können. Darüber hinaus soll eine Vorrichtung zur Durchführung des Verfahrens angegeben werden.

Diese Aufgabe wird durch eine Verfahren gemäss Anspruch 1 und eine Vorrichtung gemäß Anspruch 6 gelöst.

Das erfindungsgemäße Verfahren zeichnet sich dadurch aus, dass die Lebensmittelreste, also biologisches Material, vorzugsweise mit einer Schnecke gepresst werden. Das wasser-/Fettgemisch, welches bei diesem Pressvorgang austritt, wird getrennt. Das Wasser wird dem Abwasser zugeführt, und das Fett wird dem Bearbeitungsprozess, das heißt den Lebensmittelresten wieder zugeführt.

Im Einzelnen gliedert sich das erfindungsgemäße Verfahren in folgende Schritte:
1. Einfüllen der Lebensmittelreste in die vorrichtung,
2. Ausführung des Pressvorganges,
3. Abscheiden des Wasser-/Fettgemisches unter Abscheidung des Fettes und Rückführung des Fettes in das Lebensmittelgemisch,
4. Entnehmen der gepressten Lebensmittelreste.

Gemäß einer besonders bevorzugten Ausführungsform läuft das erfindungsgemäße Verfahren mit folgenden Verfahrensschritten ab:
1. Einfüllen der Lebensmittelreste in die Vorrichtung,
2. Verschließen der vorrichtung,
3. Pressen der Lebensmittelreste unter Abscheiden eines Wasser-/Fettgemisches,
4. Abscheiden des Fettes aus dem Wasser-/Fettgemisch und Rückführung des Fettes zu den Lebensmittelresten,
5. Erzeugen eines Unterdruckes oder eines Vakuums in der Vorrichtung, beispielsweise von weniger als 25 Millibar,
6. Durchführen eines Pressvorganges unter Unterdruck,
7. Belüften auf Atmosphärendruck,
8. Öffnen der Vorrichtung und Entnehmen des Materials.

Gemäß einer weiteren vorteilhaften Ausführungsform des erfindungsgemäßen verfahrens ist es möglich, vor dem Öffnen der Vorrichtung eine Injektion mit Bindemitteln und/oder Geruchsabsorbern oder anderen Stoffen vorzunehmen. In diesem Fall werden Bindemittel in das gepresste Material eingearbeitet und bewirken, dass das Material eine Pellet-oder Granulatform erreicht.

Die erfindungsgemäße Vorrichtung zeichnet sich dadurch aus, dass ein trichterförmiger Aufnahmebehälter für die Lebensmittelreste vorgesehen ist. Im unteren Bereich des trichterförmigen Behälters ist eine Schnecke angeordnet. Die Schnecke trägt an ihren Außenkanten Bürsten. Die Bürsten bestehen vorzugsweise aus Kunststoffmaterial oder Edelstahl je nach Füllmaterial.

Mit der Schnecke wird das Material gegen ein Hindernis, vorzugsweise einen Schieber gepresst. Im unteren Bereich des trichterförmigen Aufnahmebehälters sind Öffnungen vorgesehen, durch die das aus den Lebensmittelresten austretende Wasser-/Fettgemisch aus dem Aufnahmebehälter austreten kann. Das Wasser-/Fettgemisch wird in eine Auffangvorrichtung geleitet. In der Auffangvorrichtung ist ein Fettabscheider vorgesehen. Hierzu ist eine Pumpe in dem Behälter angeordnet, die im oberen Bereich einen Trichter aufweist. Das wasser-/Fettgemisch weist in dem Becken einen Pegel auf, derart, dass der Pegel des Wasser-/Fettgemisches etwas höher liegt als der Trichter der Pumpe. Hierdurch kann mit der Pumpe das Fett von dem Wasser-/Fettgemisch abgesaugt werden. In dem Auffangbecken ist eine Tauchwand vorgesehen. Das Wasser fließt im unteren Bereich unter dieser Platte durch, so dass in dem durch die Platte abgeteilten Bereich des Beckens lediglich das Wasser vorhanden ist ohne Fettanteile. Dieses Wasser wird dem normalen Abwasser zugeleitet. Es ist auch möglich, dieses wasser einem Bioreaktor zuzuführen und dort aufzubereiten.

Gemäß einer besonders vorteilhaften Ausführungsform kann diesem Fettabscheider auch das Abwasser, beispielsweise einer Großküche, zugeleitet werden. Dieses Abwasser wird dann gleich mit getrennt.

Das von der Tauchpumpe abgeschiedene Fett wird den Lebensmittelresten in dem trichterförmigen Auffangbehälter wieder zugeführt.

Der Austritt des wasser-/Fettgemisches aus dem Auffangbehälter geschieht vorteilhaft durch in dem Bodenbereich des Behälters angeordnete Bohrungen. Die Bohrungen sind gemäß der Erfindung vorteilhaft mit einem sehr kleinen Durchmesser ausgebildet, so dass sie sich nicht mit Lebensmittelresten zusetzen können. Vorteilhaft sind an der Schnecke Kunststoffbürsten oder Edelstahlbürsten angeordnet, die derart ausgebildet sind, dass sie über die Bohrungen streichen und diese von Lebensmittelresten, die sich in den Bohrungen absetzen sollten, reinigen.

Die Bohrungen sind vorteilhaft in Abflussrichtung sich konisch erweiternd ausgebildet. Hierdurch wird ein Zusetzen ebenfalls vermieden. Die Bürsten der Schnecke weisen zusammen mit den kleinen Bohrungen eine Schneidwirkung auf. Sollte sich ein Lebensmittelpartikel in einer Bohrung festsetzen, wird beim nächsten Drüberstreifen der Bürsten dieser Partikel durchgeschnitten. Der in dem Behälter verbleibende Teil wird mit der Schnecke weiterbefördert. Der in der Bohrung vorhandene Teil fließt mit dem Wasser und dem FetL ab, wobei es sich hierbei jedoch um sehr kleine Teile handelt.

Gemäß einer besonders bevorzugten Ausführungsform ist eine zusätzliche Vorrichtung zur Erzeugung eines Unterdruckes vorgesehen. Hierdurch wird der Vorgang des Flüssigkeitsentzuges aus dem Lebensmittelrestegemisch gefördert. Gemäß einer weiteren vorteilhaften Ausführungsform ist es möglich, im vorderen Bereich der Schnecke, im Bereich des Auslasses und des Schiebers, eine vorrichtung vorzusehen, mit der Bindemittel oder andere Stoffe dem Gemisch zugesetzt werden kann.

Die erfindungsgemäße Vorrichtung hat den Vorteil, dass Lebensmittelreste, die beispielsweise in Großküchen von Altenheimen, Krankenhäusern und dergleichen anfallen, aufgearbeitet werden, so dass das Wasser entfernt wird und das Abwasser einen Reinlichkeitsgrad aufweist, so dass es dem üblichen Abwasser zugeführt werden kann. Die mit der Vorrichtung bearbeiteten Lebensmittelreste weisen ein wesentlich geringeres Gewicht und Volumen auf. Sie weisen darüber hinaus einen Trocknungsgrad auf, so dass sie beispielsweise einer Lebensmittclverbrennung oder Biogasanlage zugeführt werden können.

Die erfindungsgemäße Vorrichtung kann auch verwendet werden, um Produktabfälle zu verarbeiten. Produktabfälle fallen bei Firmen an, die beispielsweise Lebensmittel in Konserven herstellen. Sind die Konserven beispielsweise verbeult, dürfen die Konserven nicht mehr verkauft werden, und diese Produkte müssen vernichtet werden. In diesem Fall ist es besonders vorteilhaft, vor dem Trichter einen Schredder anzuordnen. In diesem Schredder können die Produktabfälle angeordnet werden. Sie werden dort zerkleinert und fallen anschließend in den trichterförmigen Aufnahmebehälter, wo sie der schon beschriebenen Lebensmittelrestebearbeitung zugeführt werden.

Die erfindungsgemäße Vorrichtung hat den Vorteil, dass sie auch große Teile verarbeiten kann. Knochen, Besteck und dergleichen werden beispielsweise mit den Lebensmittelresten verpresst. Die Maschine nimmt hierdurch keinen Schaden, wie es beispielsweise bei zum Stand der Technik gehörenden Maschinen mit Schneidvorrichtungen der Fall ist.

Als vakuumvorrichtung ist gemäß einer vorteilhaften Ausführungsform der Erfindung ein Pufferraum vorgesehen, in dem mittels einer Vakuumpumpe ein Unterdruck erzeugt wird. Als vorteilhaft hat sich ein Druck unter 100 Millibar erwiesen. Dieser Pufferraum ist über eine Leitung mit dem trichterförmigen Auffangbehälter verbunden. Wenn das Material einem ersten Pressvorgang unterzogen wurde und die Schnecke reversierend laufen gelassen wurde, so dass sich das Material nach einem ersten Pressvorgang wieder in dem trichterförmigen Auffangbehälter befindet, wird ein ventil, welches in der Leitung zwischen dem Pufferraum und dem trichterförmigen Auffangbehälter angeordnet ist, geöffnet, so dass in dem trichterförmigen Auffangbehälter schlagartig ein Unterdruck entsteht. Hierdurch kann in kürzester Zeit Restfeuchte entweichen. Nach diesem Vorgang läuft die Schnecke wieder in der üblichen Richtung, so dass das Material wieder gegen den Schieber gepresst wird. Anschließend wird der Schieber geöffnet, und das Material kann entsorgt werden. Hierbei hat es sich als vorteilhaft herausgestellt, das Material in Endlossäcken zu entsorgen. Durch die Verwendung von Endlossäcken erhält man mit der erfindungsgemäßen Vorrichtung ein geschlossenes System, wodurch eine Umweltbelastung und eine Geruchsbelastung vermieden werden.

Die Maschine ist für die Anwendungsform mit dem Vakuum vakuumdicht aufgebaut. Das bedeutet, dass die Öffnung des trichterförmigen Aufnahmebehälters vakuumdicht verschlossen sein muss. Im unteren Bereich, wo die Öffnungen für das Abführen des Wasser-/Fettgemisches vorgesehen sind, dichtet das System durch die zu bearbeitende Masse ab.

Die Bohrungen im unteren Bereich des trichterförmigen Aufnahmebehälters für die Lebensmittelreste sind vorteilhaft kleiner als fünf Millimeter, gemäß einer besonders bevorzugten Ausführungsform kleiner als drei Millimeter ausgebildet. Anstelle der Bohrungen ist es auch möglich, Spalte in Form von Spaltsieben vorzusehen. Wird ein Bioreaktor nachgeschaltet, ist eine Loch- oder Spaltgröße von circa 0,2 bis 0,5 Millimetern erforderlich.

Durch die an der Schnecke angeordneten Bürsten ist die Vorrichtung selbstreinigend ausgebildet.

Das Abwasser weist die erforderlichen Werte auf in Bezug auf den chemischen Sauerstoffbedarf (CSB) und den biochemischen Sauerstoffbedarf (BSR), die bei der erfindungsgemäßen Vorrichtung jeweils unter 600 Milligramm pro Liter liegen.

Die erfindungsgemäße Vorrichtung weist den weiteren Vorteil auf, dass ein Vorsortieren der Abfälle nicht mehr erforderlich ist. Zum Beispiel müssen Servietten und dergleichen nicht aussortiert werden. Diese können mit dem anderen Material gepresst werden. Auch Besteck, welches sich versehentlich in dem Abfall befindet, wird mit verpresst, ohne dass die Vorrichtung Schaden nimmt.

Mit der erfindungsgemäßen Vorrichtung lässt sich eine Reduzierung des Volumens von 60 % bis 70 % erreichen. Eine Gewichtsreduzierung liegt bei einem üblichen Gemisch aus Lebensmittelresten ebenfalls bei 60 % bis 70 %.

Der trichterförmige Aufnahmebehälter weist eine besondere Querschnittsform auf. Im unteren Bereich ist der Behälter im Querschnitt halbkreisförmig ausgebildet. In diesem Bereich sitzt die Schnecke. An diesen im Querschnitt halbkreisförmigen Bereich schließt sich gemäß einer besonders bevorzugten Ausführungsform der Erfindung ein Bereich mit senkrecht angeordneten Seitenwänden an. Erst nach diesem senkrecht ausgerichteten Bereich erweitert sich der Aufnahmebehälter zu einer trichterförmigen Form. Die Ausbildung mit senkrechten Seitenwänden im unteren Bereich hat den vorteil, dass sich die Lebensmittelreste im Bereich des Aufnahmebehälters sehr gut durchmischen. Im unteren Bereich der Schnecke wird das Material mit der Schnecke mittransportiert. Oberhalb der Schnecke, im Bereich der senkrecht verlaufenden Seitenwände, bewegt sich das Material in entgegengesetzter Richtung zur Förderrichtung der Schnecke, so dass das Material eine Weile im Aufnahmebehälter bleibt und dort eine so genannte walzenbildung des Materials erfolgt. Hierdurch wird eine besonders gute Durchmischung des Materials erreicht.

Die Schnecke ist durchgehend bis zu dem Schieber ausgebildet. Die Schnecke reicht von dem Aufnahmebehälter in ein Rohr, welches im Durchmesser der Schnecke angepasst ausgebildet ist. Dort befindet sich die eigentliche Presszone. Gemäß einer weiteren Ausführungsform ist das Rohr als ein Rohr ausgebildet, welches geöffnet werden kann. Das Rohr kann beispielsweise aufgeklappt werden, um es zu reinigen oder um eine abgenutzte Schnecke austauscben zu können.

Bei der Ausführungsform, bei der durch Injektion Bindemittel den Lebensmittelresten zugeführt werden, ist es möglich, auch dort die Presszone zugänglich zu gestalten. Im Bereich der Injektion ist es vorteilhaft, wenn die Schneckenflügel eine andere Steigung aufweisen, so dass dort eine optimale Vermischung stattfindet.

In dem Bereich, wo lediglich das Material gepresst wird, sind gemäß einer weiteren vorteilhaften Ausführungsform zusätzliche Leisten angeordnet. Diese Leisten, die auch als Schleißleisten bezeichnet werden, dienen dazu, dass das Material sich nicht mit der Schnecke mitdreht und hierdurch eine bessere Presswirkung erzielt wird.

Ist ein Injektionsbereich für Bindemittel vorhanden, sind dort vorteilhaft keine Schleißleisten vorgesehen, damit sich dort das Material optimal vermischt.

Gemäß einer weiteren Ausführungsform ist es auch möglich, eine Injektion von Bindemitteln oder anderen Materialien im Bereich des Aufnahmebehälters vorzusehen. Hier wird die Vermischung optimal durchgeführt.

Die Welle der Schnecke ist bei der erfindungsgemäßen Vorrichtung einseitig gelagert. Die zweite Lagerung erfolgt durch das Produkt selbst.

Der untere Bereich des Auffangbehälters ist vorteilhaft aus einem Edelstahlblech gebildet, in dem auch die Bohrungen vorgesehen sind. Das Edelstahlblech weist vorteilhaft eine Dicke auf, so dass die Bohrungen mit ihren sich konisch erweiternden Enden in dem Edelstahlblech ausgeformt sein können. Die Bohrungen weisen vorteilhaft einen Durchmesser von weniger als fünf Millimetern, vorzugsweise weniger als drei Millimetern auf. Der zylindrische Bereich der Bohrung ist vorteilhaft einen Millimeter tief ausgestaltet. An diesen Bereich schließt sich der sich konisch erweiternde Teil der Bohrung an. Die einzelnen Bohrungen weisen vorteilhaft einen Abstand von 10 bis 50 Millimetern auf. Besonders vorteilhaft ist ein Abstand von circa 20 Millimetern.

Die Bohrungen können auch sich ausschließlich konisch erweiternd ausgebildet sein. Diese Ausführungsform ist vorteilhaft, wenn die Bürsten aus Kunststoff bestehen. Hierdurch wird der beschriebene Schneideffekt deutlich erhöht.

Sind die Bürsten aus Edelstahl ausgebildet, weisen die Bohrungen vorteilhaft einen zylindrischen Teil auf, damit sich die Kanten nicht abnutzen.

Die Verwendung von Edelstahl- oder Kunststoffbürsten richtet sich nach dem zu verarbeitenden Material. Sind beispielsweise Fischreste in dem Material vorhanden, sind Edelstahlbürsten, die härter sind, vorteilhafter, da hierdurch Gräten und härtere Teile besser verarbeitet werden können. Bei üblichen Lebensmittelresten sind Kunststoffbürsten ausreichend.

Das aus der erfindungsgemäßen Vorrichtung abgeschiedene Abwasser wird vorteilhaft in einem Bioreaktor oder in einer Membranfilteranlage aufbereitet.

Sämtliche gemachten Ausführungen beziehen sich auf Lebensmittelreste und Produktabfälle gleichermaßen.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
- Fig. 1: eine erfindungsgemäße Vorrichtung, teilweise geschnitten;
- Fig. 2: einen trichterförmigen Aufnahmebehälter im Querschnitt;
- Fig. 3: eine Einzelheit der Fig. 2;
- Fig. 4: eine Bohrung mit zylindrischem Teil im Querschnitt;
- Fig. 5: eine Bohrung, die sich ausschließlich konisch erweiternd ausgebildet ist im Querschnitt.

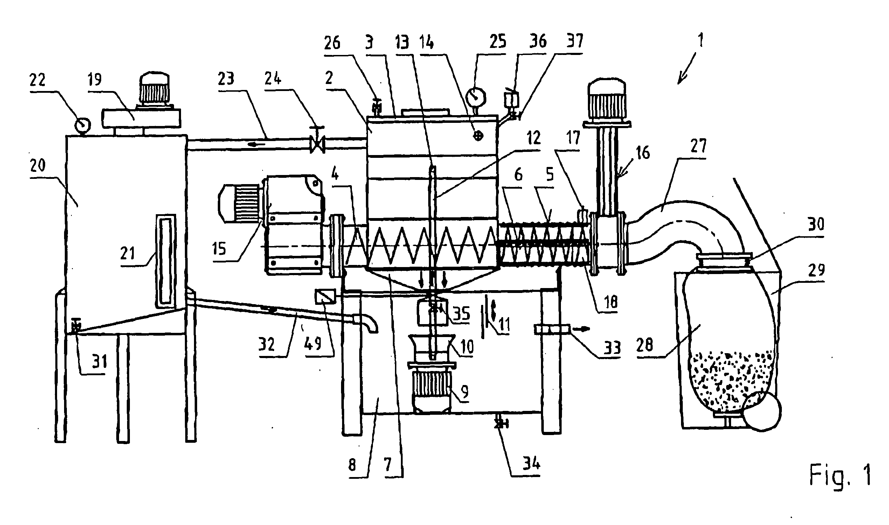

Fig. 1 zeigt eine Vorrichtung (1) mit einem trichterförmigen Aufnahmebehälter (2), der mit einem Deckel (3) verschließbar ist. In den Aufnahmebehälter (2) werden die aufzubereitenden Lebensmittelreste (nicht dargestellt) eingebracht. Mit einer Schnecke (4) werden die Lebensmittelreste in einem Rohr (5), welches eine Presszone darstellt, gepresst. Das Rohr (5) weist eine Halbschale (6) zum Öffnen des Rohres (5) auf. Hierdurch kann das Rohr gereinigt und die Schnecke (4) ausgewechselt werden.

Während des Pressvorganges wird ein Wasser-/Fettgemisch (7) abgeschieden und einem Auffangbehälter (8) zugeführt. In dem Auffangbehälter (8) ist eine Fettpumpe (9) mit einem Fettpumpentrichter (10) angeordnet. Darüber hinaus ist im Auffangbehälter (8) eine verstellbare Tauchwand (11) vorgesehen. Das wasser-/Fettgemisch sammelt sich in dem Auffangbehälter (8). Der Pegel des Wasser-/Fettgemisches liegt geringfügig höher als der obere Rand des Fettpumpentrichters (10). Mittels der Fettpumpe (9) wird das auf dem Wasser schwimmende Fett abgesaugt und über eine Leitung (12) dem Aufnahmebehälter (2) und damit den Lebensmittelresten zugeführt. Hierzu ist eine Einspritzdüse (13) für das Fett in dem Aufnahmebehälter (2) vorgesehen. Der Aufnahmebehälter (2) weist darüber hinaus einen Spülstutzen (14) auf, um den Aufnahmebehälter ausspülen zu können.

Die Schnecke (4) wird über einen Motor (15) angetrieben und presst die Lebensmittelreste gegen einen Schieber (16). Optional kann ein Injektorstutzen (17) vorgesehen sein, mittels dem Bindemittel (nicht dargestellt) den Lebensmittelresten zugeführt werden kann. Mittels der Schnecke werden die Bindemittel mit den Lebensmittelresten vermischt. Hierzu ist eine gegenläufige Schneckenwendel, die abgesetzt ausgebildet ist, vorgesehen.

Gemäß dem erfindungsgemäßen verfahren werden die Lebensmittelreste in den Aufnahmebehälter (2) eingefüllt, und der Deckel (3) wird verschlossen. Die Lebensmittelreste werden einem ersten Pressvorgang unterzogen, wobei ein Wasser-/Fettgemisch in den Auffangbehälter (8) gelangt. Nach dem ersten Pressvorgang läuft die Schnecke gegenläufig, so dass die gepressten Lebensmittelreste aus dem Rohr (5) wieder in den Aufnahmebehälter (2) gelangen. Anschließend wird in dem Aufnahmebehälter (2) ein Unterdruck erzeugt. Hierzu ist eine Vakuumpumpe (19) vorgesehen, die einen Pufferbehälter (20) evakuiert, und zwar vorteilhaft schon während des ersten Pressvorganges. Der Pufferbehälter (20) weist ein Schauglas (21) für den Füllstand auf. Mittels eines Vakuummeters (22) lässt sich der Druck in dem Pufferbehälter (20) kontrollieren. Über eine Leitung (23) und ein Ventil (24) wird ein Druckausgleich in dem Pufferbehälter (20) und dem Aufnahmebehälter (2) durchgeführt. Der Druck in dem Aufnahmebehälter (2) wird über ein Vakuummeter (25) kontrolliert. Nach dem schlagartigen Evakuieren des Aufnahmebehälters (2) läuft die Schnecke wieder in Pressrichtung und der zweite Pressvorgang findet statt. In dem Rohr (5) befindet sich hierzu die eigentliche Presszone. Nach diesem zweiten Pressvorgang wird über ein BelüfLungsventil (26) der Aufnahmebehälter (2) wieder unter Atmosphärendruck gesetzt. Anschließend wird der Schieber (16) geöffnet und die gepressten Lebensmittelreste gelangen über ein Rohr (27) in einen Endlossack (28), der in einer Mülltonne (29) angeordnet ist. Die verbindung zwischen dem Rohr (27) und dem Endlossack (28) besteht aus einer Endlossackhalterung (30) mit Bajonettverschluss.

Der Pufferbehälter (20) weist zum einen ein Ventil (31) für eine Entleerung auf für die sich im Pufferbehälter (20) ansammelnde Feuchtigkeit. Darüber hinaus ist ein Rücklauf (32) vorgesehen, der unmittelbar in den Auffangbehälter (8) führt. Dadurch ist gewährleistet, dass auch die sich im Pufferbehälter (20) ansammelnde Feuchtigkeit in dem Fettabscheider getrennt wird. Hierdurch ist gewährleistet, dass das Wasser des Wasser-/Fettgemisches über einen höhenverstellbaren Ablauf (33), der höhenverstellbar ohne Querschnittverengung ist, dem Abwasserkanal zugeführt werden kann, und einem Reinlichkeitsgrad entspricht, so dass das Wasser einer Kläranlage zugeführt werden darf.

Der Auffangbehälter (8) weist zusätzlich ein Ventil (34) auf, welches geöffnet wird, wenn der Behälter (8) zur Reinigung entleert werden soll. In der Leitung (12) ist darüber hinaus ein Druckventil (35) vorgesehen.

Der Aufnahmebehälter (2) weist optional zusätzlich einen.doppelten Dosiermittelspeicher (36) auf, der ein Dosierventil (37) aufweist, um Bindemittel zuzuführen.

Der Aufnahmebehälter (2) ist mit einem Vakuumschieber (49) verschließbar.

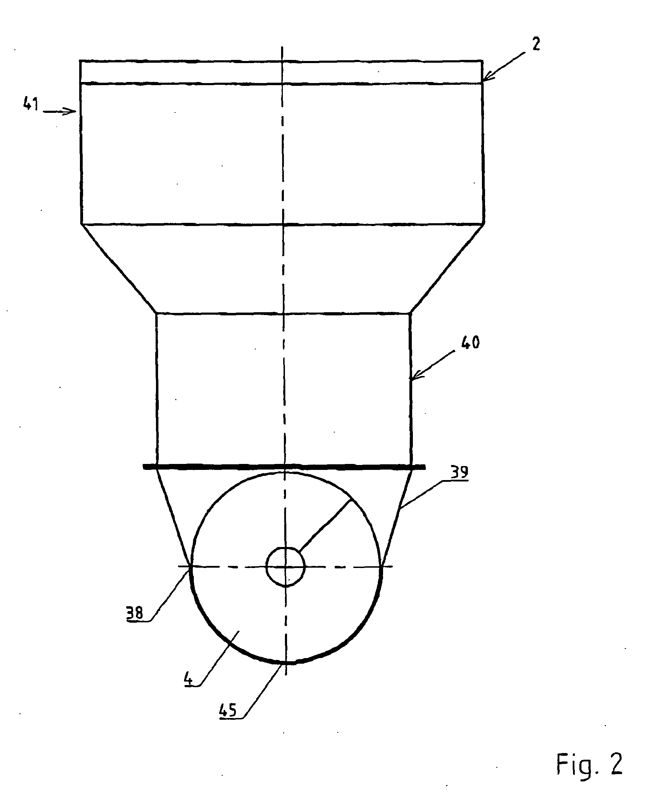

Fig. 2 zeigt den Auffangbehälter im Querschnitt. In dem Auffangbehälter (2) ist die Schnecke (4) angeordnet. Im Bereich der Schnecke (4) ist der Auffangbehälter (2) halbkreisförmig ausgebildet. An diesen halbkreisförmigen Teil (38) schließt sich ein sich minimal erweiternder Bereich (39) an. Hieran anschließend ist ein Teil (40) mit senkrecht angeordneten Seitenwänden angeordnet. Durch diese senkrecht angeordneten Seitenwände ist gewährleistet, dass die Lebensmittelreste sich auf jeden Fall im Bereich der Schnecke (4) sammeln. An den Teil (40) sich anschließend ist ein Teil (41) vorgesehen, der trichterförmig ausgebildet ist.

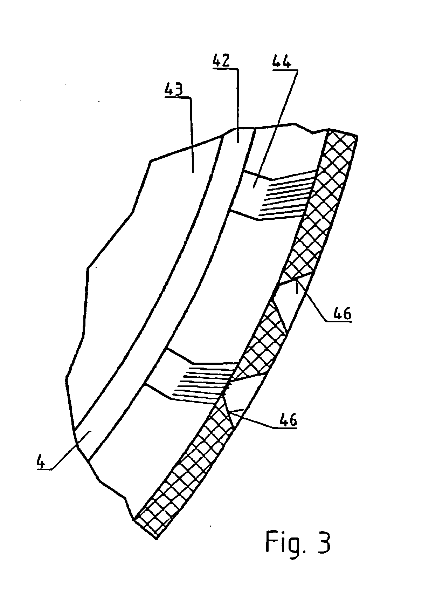

Fig. 3 zeigt eine Außenkante (42) der Schnecke (4). Auf der Schneckenwelle (43) sind Bürsten (44) angeordnet. Die Bürsten (44) sind aus Polyethylen oder aus Edelstahl (VA) ausgebildet. Die Bürsten (44) streichen über ein Edelstahlblech (45) des Aufnahmebehälters (2). In dem Edelstahlblech (45) sind Bohrungen (46) angeordnet, die sich konisch erweiternd ausgebildet sind.

Anstelle der Bohrungen (46) können auch Spaltsiebe vorgesehen sein, die quer zur Bewegungsrichtung der Bürsten (44) ausgerichtet sind.

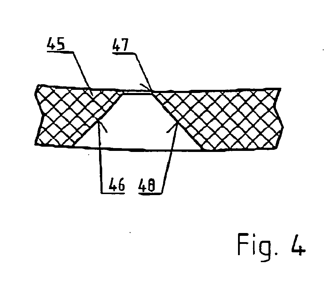

Fig. 4 zeigt eine Bohrung (46), die einen zylindrischen Teil (47) und einen sich konisch erweiternden Teil (48) aufweist. Die Bürsten (44) haben den Vorteil, dass sie die Bohrungen (46) reinigen. Bei dieser Ausführungsform der Bohrungen sind die Bürsten (44) aus Edelstahl gefertigt.

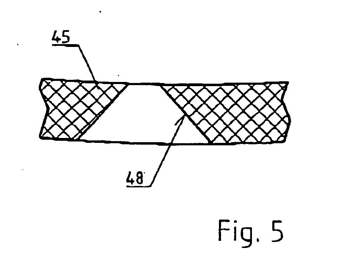

Fig. 5 zeigt die Bohrung (46), die ausschließlich sich konisch erweiternd ausgebildet ist. Hier sind die Bürsten (44) aus Kunststoff ausgebildet.

### Bezugszahlen

- 1: Vorrichtung
- 2: Aufnahmebehälter
- 3: Deckel
- 4: Schnecke
- 5: Rohr
- 6: Halbschale
- 7: Wasser-/Fettgemisch
- 8: Auffangbehälter
- 9: Fettpumpe
- 10: Fettpumpentrichter
- 11: Tauchwand
- 12: Leitung
- 13: Einspritzdüse
- 14: SpülstuLzen
- 15: Motor
- 16: Schieber
- 17: Injektorstutzen
- 18: gegenläufige Schneckenwände
- 19: vakuumpumpe
- 20: Pufferbehälter
- 21: Schauglas
- 22: Vakuummeter
- 23: Leitung
- 24: ventil
- 25: Vakuummeter
- 26: Belüftungsventil
- 27: Rohr
- 28: Endlossack
- 29: Mülltonne
- 30: Endlossackhalterung
- 31: Ventil
- 32: Rücklauf
- 33: Ablauf
- 34: Ventil
- 35: Druckventil
- 36: Dosiermittelspeicher
- 37: Dosierventil
- 38: halbkreisförmiger Teil
- 39: trichterförmiger Teil
- 40: Teil mit senkrechten Seitenwänden
- 41: Trichter
- 42: Außenkante der Welle (4)
- 43: Schneckenwelle
- 44: Bürsten
- 45: Edelstahlblech
- 46: Bohrungen
- 47: zylindrischer Teil der Bohrungen (46)
- 48: sich konisch erweiternder Teil der Bohrungen (46)
- 49: vakuumschieber

## Patentansprüche

1. Verfahren zur Aufbereitung von Lebensmittelresten und/oder Produktabfällen, wobei die Lebensmittelreste und/oder Produktabfälle in einer Pressvorrichtung gepresst werden, ein Wasser-/Fettgemisch abgeschieden und das Fett von dem Wasser getrennt wird,
**dadurch gekennzeichnet, dass** das Fett mit den Lebensmittelresten und/oder Produktabfällen wieder der Pressvorrichtung (4) zugeführt wird.

2. Verfahren nach Anspruch 1, **dadurch gekennzeichnet, dass** das Verfahren oder einzelne Verfahrensschritte unter Unterdruck durchgeführt werden.

3. Verfahren nach Anspruch 2, **dadurch gekennzeichnet, dass** ein erster Pressvorgang durchgeführt wird, dass die gepressten Lebensmittelreste und/oder Produktabfälle dem Unterdruck ausgesetzt werden, und dass ein zweiter Pressvorgang durchgeführt wird.

4. Verfahren nach einem der vorhergehenden Ansprüche, **dadurch gekennzeichnet, dass** den gepressten Lebensmittelresten und/oder Produktabfällen Bindemittel zugesetzt und mit diesen vermischt werden.

5. Verfahren nach einem der vorhergehenden Ansprüche, **dadurch gekennzeichnet, dass** die Lebensmittelreste und/oder Produktabfälle mit oder ohne weitere Feststoffe vor dem Pressen geschreddert werden.

6. Vorrichtung zur Durchführung des Verfahrens nach Anspruch 1, bei der ein Aufnahmebehälter (2) mit einer Pressvorrichtung (4, 16) für die Lebensmittelreste und/oder Produktabfälle vorgesehen ist, und bei der im Bereich der Pressvorrichtung (4, 16) eine Siebvorrichtung (45, 46) zum Abscheiden des Wasser-/Fettgemisches vorgesehen ist, **dadurch gekennzeichnet, dass** eine Vorrichtung (9, 12) zum Rückführen des abgetrennten Fettes in den Aufnahmebehälter (2) vor der Pressvorrichtung (4) vorgesehen ist.

7. Vorrichtung nach Anspruch 6, **dadurch gekennzeichnet, dass** die Pressvorrichtung (4) als Schnecke ausgebildet ist.

8. Vorrichtung nach einem der Ansprüche 6 oder 7, **dadurch gekennzeichnet, dass** an Außenkanten (42) der Schnecke (4) Bürsten (44) angeordnet sind.

9. Vorrichtung nach Anspruch 8, **dadurch gekennzeichnet, dass** die Bürsten (44) aus Kunststoff oder Edelstahl gebildet sind.

10. Vorrichtung nach einem der Ansprüche 6 bis 9, **dadurch gekennzeichnet, dass** die Siebvorrichtung als ein im Bereich der Pressvorrichtung (4) ausgebildetes Blech (45) mit Bohrungen (46) ausgebildet ist.

11. Vorrichtung nach Anspruch 10, **dadurch gekennzeichnet, dass** die Bohrungen (46) in Abflussrichtung einen sich nach außen konisch erweiternden Bereich (48) aufweisen.

12. Vorrichtung nach Anspruch 10, **dadurch gekennzeichnet, dass** die Bohrungen (46) einen Durchmesser von weniger als fünf Millimetern aufweisen.

13. Vorrichtung nach Anspruch 12, **dadurch gekennzeichnet, dass** die Bohrungen einen Durchmesser von weniger als drei Millimetern aufweisen.

14. Vorrichtung nach Anspruch 6, **dadurch gekennzeichnet, dass** der Aufnahmebehälter (2) im Querschnitt wenigstens teilweise trichterförmig ausgebildet ist.

15. Vorrichtung nach Anspruch 14, **dadurch gekennzeichnet, dass** der Aufnahmebehälter (2) im Bereich (38) der Schnecke (4) im Querschnitt halbkreisförmig oder wenigstens annähernd halbkreisförmig ausgebildet ist, und dass an den halbkreisförmigen Querschnitt sich mittelbar oder unmittelbar anschließend ein Teil (40) mit senkrecht angeordneten Seitenwänden vorgesehen ist.

16. Vorrichtung nach Anspruch 15, **dadurch gekennzeichnet, dass** an dem Teil (40) mit senkrecht angeordneten Seitenwänden sich anschließend ein sich erweiternder trichterförmiger Teil vorgesehen ist.

17. Vorrichtung nach einem der Ansprüche 6 bis 16, **dadurch gekennzeichnet, dass** die Vorrichtung (1) wenigstens eine Auffangvorrichtung (8) für das Wasser-/Fettgemisch aufweist.

18. Vorrichtung nach Anspruch 17, **dadurch gekennzeichnet, dass** in der Auffangvorrichtung (8) wenigstens ein Fettabscheider (9, 10) vorgesehen ist.

19. Vorrichtung nach Anspruch 18, **dadurch gekennzeichnet, dass** der Fettabscheider als Pumpe (9), insbesondere als Tauchpumpe, ausgebildet ist.

20. Vorrichtung nach einem der Ansprüche 17 bis 19, **dadurch gekennzeichnet, dass** in der Auffangvorrichtung (8) wenigstens eine Tauchwand (11) zum Abscheiden des Wassers vorgesehen ist.

21. Vorrichtung nach einem der Ansprüche 6 bis 20, **dadurch gekennzeichnet, dass** die Vorrichtung (1) vakuumgedichtet ausgebildet ist und wenigstens eine Vakuumpumpe (19) vorgesehen ist.

22. Vorrichtung nach einem der Ansprüche 6 bis 21, **dadurch gekennzeichnet, dass** vor dem Aufnahmebehälter (2) wenigstens ein Schredder angeordnet ist.

23. Vorrichtung nach einem der Ansprüche 6 bis 22, **dadurch gekennzeichnet, dass** wenigstens eine Injektionsvorrichtung (17, 36) für die Zuführung von Bindemitteln zu den gepressten Lebensmittelresten und/oder Produktabfällen vorgesehen ist.

24. Vorrichtung nach Anspruch 7, **dadurch gekennzeichnet, dass** die Schnecke (4) als eine die Lebensmittelreste und/oder Produktabfälle gegen einen Schieber (16) pressende Schnecke (4) ausgebildet ist.

25. Vorrichtung nach einem der Ansprüche 6 bis 24, **dadurch gekennzeichnet, dass** eine Presszone für die Lebensmittelreste und/oder Produktabfälle vorgesehen ist.

26. Vorrichtung nach Anspruch 25, **dadurch gekennzeichnet, dass** ein Rohr (5) als Presszone vorgesehen ist.

27. Vorrichtung nach Anspruch 26, **dadurch gekennzeichnet, dass** das Rohr (5) über seine Länge wenigstens teilweise öffenbar ist.

28. Vorrichtung nach einem der Ansprüche 25 bis 27, **dadurch gekennzeichnet, dass** in der Presszone in dem Rohr (5) an einer Rohrinnenwandung wenigstens eine Leiste angeordnet ist.

29. Vorrichtung nach Anspruch 7, **dadurch gekennzeichnet, dass** eine Steigung der Schneckenflügel im Injektionsbereich (17) von der Steigung der Schneckenflügel im Pressbereich unterschiedlich ausgebildet ist.

30. Vorrichtung nach einem der Ansprüche 6 bis 29, **dadurch gekennzeichnet, dass** zur Abwasseraufbereitung wenigstens ein Bioreaktor oder eine Membranfilteranlage nachgeordnet ist.

## Claims

1. A method of processing food residues and/or waste products, wherein the food residues and/or the waste products are pressed in a pressing apparatus, a mixture of water and fat is separated and the fat is removed from the water, **characterized in that** the fat is supplied again to the pressing apparatus (4) together with the food residues and/or waste products.

2. A method according to Claim 1, **characterized in that** the method or individual method steps is or are carried out under an under-pressure.

3. A method according to Claim 2, **characterized in that** a first pressing procedure is carried out, the pressed food residues and/or waste products are subjected to the under-pressure, and a second pressing procedure is carried out.

4. A method according to any one of the preceding Claims, **characterized in that** binders are added to the pressed food residues and/or waste products and are mixed with them.

5. A method according to any one of the preceding Claims, **characterized in that** the food residues and/or waste products are shredded with or without further solids before the pressing.

6. An apparatus for performing the method according to Claim 1, in which a receiving container (2) with a pressing apparatus (4, 16) for the food residues and/or the waste products is provided, and in which a screening apparatus (45, 46) for the separation of the mixture of water and fat is provided in the region of the pressing apparatus (4, 16), **characterized in that** an apparatus (9, 12) for returning the removed fat to the receiving container (2) is provided upstream of the pressing apparatus (4).

7. An apparatus according to Claim 6, **characterized in that** the pressing apparatus (4) is constructed in the form of a screw.

8. An apparatus according to one of Claims 6 or 7, **characterized in that** brushes (44) are arranged at outer edges (42) of the screw (4).

9. An apparatus according to Claim 8, **characterized in that** the brushes (44) are made of plastics material or high-grade steel.

10. An apparatus according to any one of Claims 6 to 9, **characterized in that** the screening apparatus is constructed in the form of a metal sheet (45) with bores (46) which is formed in the region of the pressing apparatus (4).

11. An apparatus according to Claim 10, **characterized in that** in the flow-off direction the bores (46) have a region enlarged outwards in a conical manner.

12. An apparatus according to Claim 10, **characterized in that** the bores (46) have a diameter of less than 5 mm.

13. An apparatus according to Claim 12, **characterized in that** the bores have a diameter of less than 3 mm.

14. An apparatus according to Claim 6, **characterized in that** the receiving container (2) is made funnel-shaped in cross-section at least in part.

15. An apparatus according to Claim 14, **characterized in that** the receiving container (2) is made semicircular or at least approximately semicircular in cross-section in the region (38) of the screw (4), and a part (40) with lateral walls arranged vertically is provided directly or indirectly adjoining the semicircular cross-section.

16. An apparatus according to Claim 15, **characterized in that** an increasing funnel-shaped part is provided adjoining the part (40) with lateral walls arranged vertically.

17. An apparatus according to any one of Claims 6 to 16, **characterized in that** the apparatus (1) has at least one collecting apparatus (8) for the mixture of water and fat.

18. An apparatus according to Claim 17, **characterized in that** at least one fat separator (9, 10) is provided in the collecting apparatus (8).

19. An apparatus according to Claim 18, **characterized in that** the fat separator is constructed in the form of a pump (9), in particular in the form of a submerged pump.

20. An apparatus according to any one of Claims 17 to 19, **characterized in that** at least one scum baffle (11) for separating the water is provided in the collecting apparatus (8).

21. An apparatus according to any one of Claims 6 to 20, **characterized in that** the apparatus (1) is made vacuum-tight, and at least one vacuum pump (19) is provided.

22. An apparatus according to any one of Claims 6 to 21, **characterized in that** at least one shredder is arranged upstream of the receiving container (2).

23. An apparatus according to any one of Claims 6 to 22, **characterized in that** at least one injection apparatus (17, 36) is provided for the supply of binders to the pressed food residues and/or waste products.

24. An apparatus according to Claim 7, **characterized in that** the screw (4) is constructed in the form of a screw (4) which presses the food residues and/or the waste products against a slide (16).

25. An apparatus according to any one of Claims 6 to 24, **characterized in that** a pressing zone for the food residues and/or the waste products is provided.

26. An apparatus according to Claim 25, **characterized in that** a tube (5) is provided as the pressing zone.

27. An apparatus according to Claim 26, **characterized in that** the tube (5) is capable of being opened at least in part over its length.

28. An apparatus according to any one of Claims 25 to 27, **characterized in that** at least one strip is arranged in the pressing zone in the tube (5) on an inner wall of the tube.

29. An apparatus according to Claim 7, **characterized in that** a pitch of the screw blades in the injection region (17) is made different from the pitch of the screw blades in the pressing region.

30. An apparatus according to any one of Claims 6 to 29, **characterized in that** at least one bioreactor or one diaphragm filter plant is arranged downstream for the wastewater processing.

## Revendications

1. Procédé pour la.préparation de restes de nourritures et/ou de déchets, les restes de nourriture et/ou les déchets étant pressés dans un système de pressage, un mélange eau/graisse étant séparé et la graisse étant séparée de l'eau,
**caractérisé en ce que** la graisse est réintroduite avec les restes de nourriture et/ou les déchets dans le système de pressage (4).

2. Procédé selon la revendication 1, **caractérisé en ce que** le procédé ou différentes étapes du procédé est réalisé sous dépression.

3. Procédé selon la revendication 2, **caractérisé en ce qu'**une première opération de pressage est effectuée, **en ce que** les restes de nourritures et/ou les déchets pressés sont soumis à la dépression, et **en ce qu'**une seconde opération de pressage est réalisée.

4. Procédé selon l'une quelconque des revendications précédentes, **caractérisé en ce qu'**aux restes de nourriture et/ou aux déchets pressés sont ajoutés des liants et sont mélangés avec ceux-ci.

5. Procédé selon l'une quelconque des revendications précédentes, **caractérisé en ce que** les restes de nourriture et/ou les déchets sont broyés avec ou sans matières solides supplémentaires avant le pressage.

6. Appareil pour mettre en oeuvre le procédé selon la revendication 1, dans lequel il est prévu un réceptacle (2) muni d'un système de pressage (4, 16) pour les restes de nourriture et/ou les déchets, et dans lequel il est prévu dans la zone du système de pressage (4, 16) un système de tamisage (45, 46) servant à séparer le mélange graisse/eau, **caractérisé en ce qu'**il est prévu un système (9, 12) pour ramener la graisse séparée dans le réceptacle (2) avant le système de pressage (4).

7. Appareil selon la revendication 6, **caractérisé en ce que** le système de pressage (4) est conçu comme vis sans fin.

8. Appareil selon l'une quelconque des revendications 6 ou 7, **caractérisé en ce que** des brosses (44) sont disposées au niveau des bords extérieurs (42) de la vis sans fin (4).

9. Appareil selon la revendication 8, **caractérisé en ce que** les brosses (44) sont en matière plastique ou en acier spécial.

10. Appareil selon l'une quelconque des revendications 6 à 9, **caractérisé en ce que** le système de tamisage est conçu comme une tôle (45) comportant des alésages (46), formée dans la zone du système de pressage (4).

11. Appareil selon la revendication 10, **caractérisé en ce que** les alésages (46) présentent dans la direction d'écoulement une zone (48) s'élargissant vers l'extérieur à la manière d'un cône.

12. Appareil selon la revendication 10, **caractérisé en ce que** les alésages (46) présentent un diamètre inférieur à cinq millimètres.

13. Appareil selon la revendication 12, **caractérisé en ce que** les alésages présentent un diamètre inférieur à trois millimètres.

14. Appareil selon la revendication 6, **caractérisé en ce que** le réceptacle (2) a, en coupe transversale, au moins partiellement la forme d'un entonnoir.

15. Appareil selon la revendication 14, **caractérisé en ce que** le réceptacle (2) dans la zone (38) de la vis sans fin (4) a, en coupe transversale, la forme d'un demi-cercle ou a au moins approximativement la forme d'un demi-cercle, et **en ce qu'**il est prévu un élément (40) comportant des parois latérales disposées verticalement, lequel est directement ou indirectement contigu à la section transversale en forme de demi-cercle.

16. Appareil selon la revendication 15, **caractérisé en ce qu'**il est prévu un élément s'élargissant à la manière d'un entonnoir, contigu à l'élément (40) comportant des parois latérales disposées verticalement.

17. Appareil selon l'une quelconque des revendications 6 à 16, **caractérisé en ce que** l'appareil (1) comporte au moins un système collecteur (8) pour le mélange graisse/eau.

18. Appareil selon la revendication 17, **caractérisé en ce qu'**il est prévu au moins un séparateur de graisse (9, 10) dans le système collecteur (8).

19. Appareil selon la revendication 18, **caractérisé en ce que** le séparateur de graisse est conçu comme pompe (9), en particulier comme pompe immergée.

20. Appareil selon l'une quelconque des revendications 17 à 19, **caractérisé en ce qu'**il est prévu au moins une paroi plongeuse (11) dans le système collecteur (8) en vue de séparer l'eau.

21. Appareil selon l'une quelconque des revendications 6 à 20, **caractérisé en ce que** l'appareil (1) est étanche au vide et **en ce qu'**il est prévu au moins une pompe à vide (19).

22. Appareil selon l'une quelconque des revendications 6 à 21, **caractérisé en ce qu'**au moins un broyeur est disposé avant le réceptacle (2).

23. Appareil selon l'une quelconque des revendications 6 à 22, **caractérisé en ce qu'**il est prévu au moins un dispositif d'injection (17, 36) pour l'amenée de liants aux restes de nourriture et/ou aux déchets pressés.

24. Appareil selon la revendication 7, **caractérisé en ce que** la vis sans fin (4) est conçue comme une vis sans fin (4) pressant les restes de nourriture et/ou les déchets contre un tiroir (16).

25. Appareil selon l'une quelconque des revendications 6 à 24, **caractérisé en ce qu'**une zone de pressage est prévue pour les restes de nourriture et/ou les déchets.

26. Appareil selon la revendication 25, **caractérisé en ce qu'**un tube (5) est prévu comme zone de pressage.

27. Appareil selon la revendication 26, **caractérisé en ce que** le tube (5) peut être ouvert au moins en partie sur sa longueur.

28. Appareil selon l'une quelconque des revendications 25 à 27, **caractérisé en ce qu'**au moins une barre est disposée dans la zone de pressage dans le tube (5) au niveau d'une paroi interne de tube.

29. Appareil selon la revendication 7, **caractérisé en ce qu'**un pas de l'ailette de la vis sans fin dans la zone d'injection (17) est configuré différemment du pas de l'ailette de la vis sans fin dans la zone de pressage.

30. Appareil selon l'une quelconque des revendications 6 à 29, **caractérisé en ce qu'**au moins un bioréacteur ou une installation à filtre à diaphragme est monté en aval pour le traitement des eaux usées.
